# EUROPÄISCHE PATENTSCHRIFT

(11) **EP 1 068 163 B1**
(45) Veröffentlichungstag und Bekanntmachung des Hinweises auf die Patenterteilung: **29.08.2001**
(21) Anmeldenummer: 99914478.5
(22) Anmeldetag: 04.03.1999
(51) Int. Cl.: C04B 35/622, G11B 5/64

(54) **SiC-SPEICHERPLATTENSUBSTRAT MIT EINER BESCHICHTUNG AUS GERMANIUM UND SILICIUM**
SILICON CARBIDE MEMORY BOARD SUBSTRATE WITH A GERMANIUM AND SILICON COATING
SUBSTRAT DE CARTE MEMOIRE EN CARBURE DE SILICIUM, MUNI D'UN REVETEMENT EN GERMANIUM ET EN SILICIUM

(30) Priorität: 02.04.1998 DE 19814890
(43) Veröffentlichungstag der Anmeldung: 17.01.2001
(73) Patentinhaber: Wacker-Chemie GmbH, 81737 München (DE)
(72) Erfinder: KÖLKER, Helmut, D-81476 München (DE)
(74) Vertreter: Potten, Holger
(86) Internationale Anmeldenummer: EP9901426
(87) Internationale Veröffentlichungsnummer: WO9951540

(56) Entgegenhaltungen:
- US-A- 4 657 825
- US-A- 5 487 931
- DATABASE WPI Week 8604 Derwent Publications Ltd., London, GB; AN 86-024662 XP002107016 & JP 60 246286 A (MEIDENSHA ELEC MFG CO LTD), 5. Dezember 1985

## Beschreibung

Die Erfindung betrifft ein Speicherplattensubstrat aus gesintertem SiC, das mit einer Legierung aus Germanium und Silicium beschichtet ist.

Festspeicherplatten werden ganz allgemein so hergestellt, daß man auf ein scheibenförmiges Substrat eine dünne magnetische Schicht durch Sputtern aufbringt. Diese Scheiben werden in ein Laufwerk eingebaut. Dort wird über einen Schreib- und Lesekopf die Information eingeschrieben und gelesen.

Zwei Substrattypen haben sich dabei durchgesetzt, zum einen ein Substrat aus einer AlMg-Legierung, das mit amorphem Nickel-Phosphor beschichtet ist und zum anderen ein Substrat aus Glas.

Die stetige Zunahme der Informationsdichte sowie der Schreib- und Lesegeschwindigkeit stellt allerhöchste Anforderungen an die Ebenheit, Härte, Steifigkeit und Glätte der Substrate sowie an die Qualität der Magnetschicht. Daher wird nach alternativen Substratmaterialien gesucht.

Aus US 5,487,931 (Annacone) ist ein Substrat bekannt, das aus gesintertem SiC besteht welches mit einem dünnen Film aus polykristallinem oder amorphem Silicium beschichtet ist. Die SiC-Grundscheibe besitzt eine so hohe Steifigkeit, Härte und Festigkeit, daß sie auch höchsten Anforderungen an geringe Vibration, an hohe Drehzahlen und geringe Plattenstärke entspricht. Die Siliciumschicht an der Oberfläche ermöglicht andererseits eine gute Politur, so daß auch hohe Anforderungen an geringe Mikrorauhigkeit der Oberfläche erfüllt werden.

Zur Herstellung einer Speicherplatte wird das SiC-Substrat bei erhöhten Temperaturen beispielsweise durch Aufsputtern mit einer Siliciumschicht beschichtet und anschließend mit einer Magnetbeschichtung auf der Siliciumoberfläche versehen werden.

Diese Beschichtung erfolgt in der Regel ebenfalls mittels Sputtern bei erhöhten Temperaturen.

Ein Ziel der Hard Disk Hersteller ist die langfristige Anhebung der Sputtertemperaturen um so den stetig wachsenden Anforderungen an die Qualität der Magnetschicht (höhere Koerzitivkraft etc.) gerecht zu werden.

Die unterschiedlichen Wärmeausdehnungskoeffizienten im SiC und Silicium führen zu mechanischen Spannungen in der Grenzfläche der beiden Materialien, so daß die Festigkeit der Verbindung herabgesetzt wird. Dieses Problem tritt insbesondere dann auf, wenn die Temperaturdifferenzen im Herstellungsverfahren erhöht werden oder wenn die Si-Schicht des Speicherplattensubstrats dicker ist als 1 - 3 µm.

Weiterhin führen die unterschiedlichen Wärmeausdehnungskoeffizienten beim Aufheizen zu Verbiegungen des Substrats. Dieses Phänomen wird beispielsweise bei Bimetallsensoren genutzt. Bei Hard Disks ist eine solche Verbiegung schädlich, da dadurch die Spezifikation der Ebenheit der Substrate nicht mehr erfüllt ist. G. Rauch beschreibt dieses Problem in IEEE Transactions on Magnetics, Vol.32, No.5, Sept. 1996 , S. 3642 am Beispiel von Ni-Schichten auf Speicherplattensubstraten aus Aluminium. Diese Verbiegung ist um so kritischer, je dünner die Substrate sind und je mehr sich die Schichtdicken auf den beiden Seiten unterscheiden. Es ist daher wünschenswert, Substrate für Festplattenspeicher zur Verfügung zu haben, die die genannten Nachteile vermeiden. Insbesondere sollte die Gefahr eines Ablösens der Si Schicht von dem SiC Substrat vermindert sein. Ferner sollte bei Temperaturerhöhung keine Verbiegung des Substrats auftreten, die zu einer Verfehlung der Spezifikation der Ebenheit des Festplattensubstrats führt.

Die vorliegende Erfindung betrifft ein Substrat aus gesintertem und mit einer Beschichtung versehenem SiC, dadurch gekennzeichnet, daß die Beschichtung in Form einer Legierung vorliegt und zu 80- 95 % aus Silicium und zu 5-20% aus Germanium besteht.

Vorzugsweise besteht die Beschichtung zu 87 - 93 % aus Silicium und zu 7 - 13 % aus Germanium.

Insbesondere bevorzugt ist der Wärmeausdehnungskoeffizient der erfindungsgemäßen Beschichtung , gleich 3,66 · 10⁻⁶ K⁻¹ bei 200°C und gleich 4,63 · 10⁻⁶ bei 700°C.

Die Schichtdicke der Beschichtung beträgt vorzugsweise 2 - 15 µm, besonders bevorzugt 4 - 18 µm.

Das erfindungsgemäße Substrat läßt beispielsweise bei 95 mm Scheibendurchmesser eine Absenkung der Scheibendicke von 0,8 mm auf 0,635 mm und weniger zu, und bei 65 mm Scheibendurchmesser eine Absenkung der Scheibendicke von 0,635 mm auf 0,381 mm und weniger zu.

Das erfindungsgemäße Substrat läßt sich vorzugsweise als Festspeicherplatte verwenden.

Die erfindungsgemäßen Festplattensubstrate haben folgende Vorteile gegen Materialien des Stands der Technik:
1) Sie ermöglichen den Einsatz dünnerer Festplattensubstrate als dies mit herkömmlichen Materialien möglich ist. Dies ist im Hinblick auf volumetrische Informationsdichte und Energieverbrauch im Laufwerk vorteilhaft.
2) Sie verbilligen die Herstellung von Festplattensubstraten. Die erfindungsgemäße Beschichtung aus Germanium und Silicium (GeSi-Schicht) kann ohne Verbiegungsgefahr wesentlich dicker auf das SiC-Substrat aufgebracht werden als eine herkömmliche Si-Schicht. Von dicken GeSi-Schichten kann soviel Material herunterpoliert werden, daß anfängliche Unebenheiten im SiC-Substrat, wie sie z.B. nach dem Drahtsägen auftreten, ausgeglichen werden können. Es ist somit kein Läppen des SiC-Substrats vor dem Beschichten des SiC-Substrats mit der GeSi-Schicht nötig.
3) Das Aufsputtern der Magnetschicht auf das erfindungsgemäße Substrat kann bei höheren Temperaturen als im Stand der Technik üblich durchgeführt werden, da selbst hohe Temperaturen bis beispielsweise 700 °C zu keiner Verbiegung des erfindungsgemäßen Substrats führen. Dies zieht verbesserte magnetische Eigenschaften des Festplattenspeichers nach sich.
4) Die elektrische Leitfähigkeit der erfindungsgemäßen GeSi-Schicht ist erhöht. Dadurch kann beim Sputtern die Methode des "Bias Sputterns" angewendet werden. Dies zieht verbesserte magnetische Eigenschaften des magnetbeschichteten Festplattensubstrats nach sich. Gleichzeitig wird die statische Aufladung der Si-Schicht reduziert und damit die Gefahr der Oberflächenverschmutzung durch Staubpartikel verringert.
5) Der Brechungsindex der erfindungsgemäßen GeSi-Schicht liegt höher als der von Silicium. Damit ist die Totalreflektion von Wärmestrahlung aus dem SiC an der Schicht gegenüber dem Silicium verbessert. Daraus folgt, daß das erfindungsgemäße Festplattensubstrat während des Aufsputterns der Magnetschicht bei erhöhter Temperatur kaum abkühlt, was wiederum den Sputtervorgang erleichtert.
6) Die Polierbarkeit der erfindungsgemäßen GeSi-Schicht ist ebenso gut wie die einer herkömmlichen Si-Schicht.
7) Die Aufwachsrate bei CVD-Beschichtung wird durch Beimischung von German (z.B. GeH₄) zum Silan (z.B. SiH₄) erhöht, so daß GeSi-Schichten schneller und damit billiger als Si-Schichten hergestellt werden können.

Das erfindungsgemäße Speicherplattensubstrat eignet sich ferner zur weiteren Behandlung, wie sie für ein herkömmliches SiC-Substrat zur Erhöhung der Sputtertemperatur zur Aufbringung von qualitativ höherwertigen Magnetschichten bekannt ist. So läßt sich beispielsweise auf die Oberfläche des erfindungsgemäßen Speicherplattensubstrats analog der Beschreibung in der unveröffentlichten deutschen Anmeldung mit dem Aktenzeichen 198 09 550.3 eine Inertschicht aufbringen.

Diese Inertschicht ist vorzugsweise ausgewählt aus der Gruppe SiO₂, Si₃N₄, SiC, SiPOS, Al₂O₃, AlN, B₄C, BN, TiN, TiC, TiCN (=TiC · 4TiN), TiB₂, ZrO₂, C und deren Mischungen. Besonders bevorzugt handelt es sich um SiO₂. Die Inertschicht wird vorzugsweise in an sich bekannter Art und Weise auf die Oberfläche des erfindungsgemäßen Substrats aufgebracht.

Erfindungsgemäße Speicherplattensubstrate werden beispielsweise hergestellt, indem ein bekanntes Abscheidungsverfahren für Si auf einer Oberfläche derart modifiziert wird, daß eine Legierung, die zu 80- 90 % aus Silicium und zu 10-20% aus Germanium besteht, auf einem SiC Substrat abgeschieden wird.

Beispielsweise kann das Aufbringen der Beschichtung auf ein SiC-Substrat mittels chemical vapor deposition (CVD) analog dem aus US 5,487,931 bekannten Aufbringen einer Si-Beschichtung auf einem SiC-Substrat erfolgen, wobei dem üblicherweise verwendeten Silan (normalerweise SiH₄) nun German (z.B. GeH₄) in Mengen zugemischt wird, daß bei der CVD eine erfindungsgmäße Beschichtung entsteht.

Das Herstellungsverfahren ist jedoch nicht auf CVD Verfahren beschränkt, es ist beispielsweise ebenso möglich, ein physical vapor deposition (PVD) - Verfahren -z.B. Sputtern oder Aufdampfen- anzuwenden. Dabei wird als Quelle für die aufzuwachsende Schicht eine Mischung aus Germanium und Silicium verwendet, so daß bei der PVD eine Beschichtung entsteht, die zu 80-95% aus Silicium und zu 5-20% aus Germanium besteht.

Die folgenden Beispiele dienen der weiteren Erläuterung der Erfindung.

### Beispiel 1:

SiC-Speicherplatten-Substrate mit einem Außendurchmesser von 65 mm, einem Innendurchmesser von 20 mm und einer Dicke von 381 µm hergestellt gemäß US 5,487,931, die im geläppten Zustand eine Ebenheit (Flatness im Sinne der amerikanischen IDEMA-Spezifikation) von 4 µm besitzen, werden in einem LPCVD (low pressure chemical vapor deposition) -Reaktor, wie er aus der Halbleiterindustrie bekannt ist, bei einer Temperatur von 650°C einer Gasmischung aus Silan (SiH₄) und German (GeH₄) von 200 mTorr ausgesetzt. Dabei wächst in an sich bekannter Weise beidseitig ein Mischkistall aus Si und Ge auf der Substratoberfläche auf mit einer Geschwindigkeit von 10 nm/min. Temperatur und Druck der Abscheidung liegen nahe an den Bedingungen, die bei einer reinen Polysilicium-Abscheidung herrschen. Der Germaniumgehalt in der Schicht nimmt monoton mit dem Prozentsatz GeH₄ in der Gasmischung zu. Durch passende Wahl des Gasmischungsverhältnisses wächst eine polykristalline Schicht mit 90 Gew.% Silicium und 10 Gew.% Germanium auf. Es zeigt sich, daß Scheiben mit einer Schichtdicke von 7,5 µm in ihrer Ebenheit nicht verändert sind.

### Vergleichsbeispiel

Gleiche Bedingungen wie in Beispiel 1 bis auf den Umstand, daß diesmal dem Silan kein German beigemischt wird.
Es zeigt sich, daß nun die Ebenheit von 4 µm vor der Beschichtung auf 8 µm nach der Beschichtung verschlechtert ist.

## Patentansprüche

1. Substrat aus gesintertem und mit einer Beschichtung versehenem SiC, **dadurch gekennzeichnet**, daß die Beschichtung in Form einer Legierung vorliegt und zu 80 - 95 % aus Silicium und zu 5 - 20% aus Germanium besteht.

2. Substrat gemäß Anspruch 1 **dadurch gekennzeichnet**, daß die Beschichtung zu 87 - 93 % aus Silicium und zu 7 - 13 % aus Germanium besteht.

3. Substrat gemäß einem der Ansprüche 1 oder 2, **dadurch gekennzeichnet**, daß der Wärmeausdehnungskoeffizient der Beschichtung , gleich 3,66 · 10⁻⁶ K⁻¹ bei 200°C und gleich 4,63 · 10⁻⁶ bei 700°C ist.

4. Substrat gemäß einem der Ansprüche 1 bis 3, **dadurch gekennzeichnet**, daß die Schichtdicke der Beschichtung 2 - 15 µm beträgt.

5. Verfahren zur Herstellung eines Substrats gemäß Anspruch 1, **dadurch gekennzeichnet**, daß ein bekanntes Abscheidungsverfahren für Si auf einer Oberfläche derart modifiziert wird, daß eine Legierung, die zu 80 - 95 % aus Silicium und zu 5 - 20 % aus Germanium besteht, auf einem SiC-Substrat abgeschieden wird.

6. Verfahren zur Herstellung eines Substrats gemäß Anspruch 1, **dadurch gekennzeichnet**, daß auf ein SiC-Substrat eine Si-Beschichtung mittels chemical vapor deposition (CVD) in bekannter Weise aufgebracht wird, mit dem Unterschied, daß dem üblicherweise verwendeten Silan nun German in Mengen zugemischt wird, daß bei der CVD eine Beschichtung entsteht, die zu 80- 95 % aus Silicium und zu 5-20% aus Germanium besteht.

7. Verfahren zur Herstellung eines Substrats gemäß Anspruch 1, **dadurch gekennzeichnet**, daß auf ein SiC-Substrat eine Si-Beschichtung mittels physical vapor deposition (PVD) in bekannter Weise aufgebracht wird, mit dem Unterschied, daß als Quelle für die aufzuwachsende Schicht eine Mischung aus Germanium und Silicium verwendet wird, so daß bei der PVD eine Beschichtung entsteht, die zu 80-95 % aus Silicium und zu 5-20% aus Germanium besteht.

8. Verwendung eines Substrats nach einem oder mehreren der Ansprüche 1 bis 4 als Festspeicherplatte.

## Claims

1. Substrate made of SiC which is sintered and provided with a coating, **characterized in that** the coating is in the form of an alloy and consists to between 80 and 95% of silicon and to between 5 and 20% of germanium.

2. Substrate according to Claim 1, **characterized in that** the coating consists to between 87 and 93% of silicon and to between 7 and 13% of germanium.

3. Substrate according to one of Claims 1 and 2, **characterized in that** the coefficient of thermal expansion of the coating is equal to 3.66 × 10⁻⁶ K⁻¹ at 200°C and is equal to 4.63 × 10⁻⁶ at 700°C.

4. Substrate according to one of Claims 1 to 3, **characterized in that** the thickness of the coating is between 2 and 15 µm.

5. Process for producing a substrate according to Claim 1, **characterized in that** a known process for depositing Si on a surface is modified in such a way that an alloy which consists to between 80 and 95% of silicon and to between 5 and 20% of germanium is deposited on an SiC substrate.

6. Process for producing a substrate according to Claim 1, **characterized in that** an Si coating is applied to an SiC substrate by means of chemical vapour deposition (CVD) in the known way, with the difference that the customarily used silane is now supplemented with amounts of germane such that a coating is created during the CVD which consists to between 80 and 95% of silicon and to between 5 and 20% of germanium.

7. Process for producing a substrate according to Claim 1, **characterized in that** an Si coating is applied to an SiC substrate by means of physical vapour deposition (PVD) in the known way, with the difference that a mixture of germanium and silicon is used as source for the layer to be grown such that a coating is created during the PVD which consists to between 80 and 95% of silicon and to between 5 and 20% of germanium.

8. Use of a substrate according to one or more of Claims 1 to 4 as a hard storage disk.

## Revendications

1. Substrat en SiC fritté et pourvu d'un revêtement, **caractérisé en ce que** le revêtement est présent sous la forme d'un alliage et se compose, à raison de 80 - 95%, de silicium et, à raison de 5 - 20%, de germanium.

2. Substrat selon la revendication 1, **caractérisé en ce que** le revêtement se compose, à raison de 87 - 93%, de silicium et, à raison de 7 - 13%, de germanium.

3. Substrat selon l'une des revendications 1 ou 2, **caractérisé en ce que** le coefficient de dilatation thermique du revêtement est égal à 3,66 · 10⁻⁶ K⁻¹ à 200°C et égal à 4,63 · 10⁻⁶ K⁻¹ à 700°C.

4. Substrat selon l'un des revendications 1 à 3, **caractérisé en ce que** l'épaisseur de couche du revêtement est de 2 - 15 microns.

5. Procédé de fabrication d'un substrat selon la revendication 1, **caractérisé en ce qu**'un procédé de dépôt connu pour Si sur une surface est modifié de telle sorte qu'il y ait dépôt, sur un substrat en SiC, d'un alliage qui se compose, à raison de 80-95%, de silicium et, à raison de 5 - 20%, de germanium.

6. Procédé de fabrication d'un substrat selon la revendication 1, **caractérisé en ce que** l'on applique sur un substrat en SiC, un revêtement en Si à l'aide du dépôt chimique en phase vapeur (CVD) de la façon connue, à la différence de ce que l'on ajoute maintenant par mélange, au silane utilisé habituellement, un composé du germanium dans des quantités telles qu'il se forme, lors du procédé CVD, un revêtement qui se compose, à raison de 80 - 95%, de silicium et, à raison de 5 - 20%, de germanium.

7. Procédé de fabrication d'un substrat selon la revendication 1, **caractérisé en ce que** l'on applique, sur un substrat en SiC, un revêtement en Si à l'aide du dépôt physique en phase vapeur (PVD) d'une façon connue, à la différence de ce que l'on utilise, en tant que source pour la couche à faire croître, un mélange de germanium et de silicium, de telle sorte qu'il se forme, lors du procédé PVD, un revêtement qui se compose, à raison de 80 - 95%, de silicium et, à raison de 5 - 20%, de germanium.

8. Utilisation d'un substrat selon l'une quelconque des revendications 1 à 4 en tant que carte de mémoire morte.
